# EUROPEAN PATENT APPLICATION

(11) **EP 4 835 762 A1**
(43) Date of publication of application: **04.11.2026**
(21) Application number: 25173496.8
(22) Date of filing: 30.04.2025
(51) Int. Cl.: G06Q 10/0631, B64F 1/36, G06Q 10/08, G06Q 50/40

(54) **AIRPORT GROUND HANDLING SYSTEM WITH AUTOMATIC HANDLING TASK GENERATION**

(71) Applicant: BEUMER Group GmbH & Co. KG, 59269 Beckum (DE)
(72) Inventor: Engelbrechtsen, Per, 8220 Brabrand (DK); Oftring, Christoph, 63755 Alzenau (DE); Brehe, Svenja, 59229 Ahlen (DE); Medegaard, Jakob, 8541 Skodsrup (DK); Hebsgaard Morell, Fie, 8464 Galten (DK); Dahlmann, Dennis, 48145 Münster (DE); Kramp, Gunnar, 8444 Balle (DK)
(74) Representative: Plougmann Vingtoft a/s

(57) **Abstract**

The invention provides an airport ground handling system (GHS) comprising a computer system (CS) comprising at least one processor and a memory. The computer system is configured to receive input data at least comprising data from a baggage handling system (BHS) of the airport capable of handling baggage items, such as an Individual Carrier based baggage handling system (ICS). Further, the system is configured to generate handling tasks based at least on the input data received from the baggage handling system, e.g. handling tasks related to transport of baggage items to or from the BHS, e.g. transport of Unit Load Devices (ULDs). Further, the system is configured to generate handling instructions based on the generated handling tasks, wherein each handling instruction comprises a specification of a handling to be performed and a timing related thereto, such as a deadline for performing the handling. Further, the system is configured to transmit the handling instructions to one or more individual information devices of respective handling entities, such as each handling entities being a person or a team of persons for performing manual operations or for operating human-operating devices or a device or a group of devices such Autonomous Mobile Robots. E.g. a handling instruction can be transmitted to a team of human-operated handling entities, such as tug drivers. The system allows effective ground handling and thereby supports a BHS capable of handling batches of baggage items to be filled in ULDs, which requires right on time handling of ULDs.

## Description

### FIELD OF THE INVENTION

The invention relates to the field of logistics and material handling systems, more specifically systems for transporting and handling materials relating to baggage items on ground in an airport. In particular, the invention provides a system and a method for automatically generating handling tasks based on available data, so as to effectively manage ground handling of baggage in an airport.

### BACKGROUND OF THE INVENTION

Baggage handling in an airport is highly complex. A baggage handling system (BHS) received checked-in baggage items with individual tags, and transporting the baggage items to a discharge position, where ground handling personnel in the airport performs a variety of handling tasks to ensure that the baggage items are loaded to the correct airplanes, that baggage items are transferred between airplanes, and that baggage items are unloaded from airplanes and correctly transferred to the BHS for transfer to reclaim.

In some cases, baggage items are transported in containers, e.g. containers known as Unit Load Devices (ULDs), where baggage items can be directly loaded from the discharge of the BHS e.g. without manual handling, and where the ULD can be loaded onto airplanes. However, in such cases effective handling requires that empty ULDs are available at the right time at the right discharge stations of the BHS.

Effective ground handling in airport operations is crucial for utilizing the capacity of a baggage handling system, e.g. reducing the number of available discharge stations to reduce the spatial footprint of the BHS. Especially, the use of ULDs requires very fast handling, since the time from requiring an empty ULD at a specific discharge station until the full ULD must be removed again can be very short. For example, batch handling of baggage items means that baggage items for a specific ULD can be discharged from the BHS within a very short time window, and if not removed, the full ULD occupies a discharge station of the BHS.

Depending on the airport ground handling provider, such fast handling of ULDs can be difficult to provide in practice, e.g. by human-operated tugs for transporting ULDs to and from discharges of the BHS.

One way to handle this problem with ULDs is to build the BHS with more discharge stations, so ULDs can rest there for a longer time period, even if full. Alternatively, the BHS can be built with a discharge conveyor system to allow manual pickup and filling of ULDs. However, both solutions require a larger spatial footprint of the baggage handling system to comply with a given baggage handling capacity. This requires space, and the BHS becomes more complex and expensive.

### SUMMARY OF THE INVENTION

Thus, according to the above description, it may be seen as an object of the present invention to provide better utilization of a baggage handling system (BHS) in an airport. More specifically, it may be seen as an object of the present invention to reduce the spatial footprint and/or increase capacity of a BHS in an airport, e.g. where ULDs are used.

In a first aspect, the invention provides an airport ground handling system comprising a computer system comprising at least one processor and a memory, wherein the computer system is configured:
- to receive input data at least comprising data from a baggage handling system of the airport capable of handling baggage items, such as an Individual Carrier based baggage handling system (ICS),
- to generate handling tasks based at least on the input data received from the baggage handling system, such as handling tasks related to transport of baggage items to or from the baggage handling system,
- to generate handling instructions based on the generated handling tasks, wherein each handling instruction comprises a specification of a handling to be performed and a timing related thereto, such as a deadline for performing the handling, and
- to transmit the handling instructions to one or more individual information devices of respective handling entities, such as each handling entities being a person or a team of persons for performing manual operations or for operating human-operating devices, and a device or a group of devices such a AMRs.

Such system is advantageous, since it can automatically transmit handling instructions to allow efficient handling of handling tasks to be performed by ground handling persons and/or machines. This is possible based on data available in the baggage handling system, since the baggage handling system has data regarding updated scheduled, estimated and actual time of flights as well as e.g. information regarding which baggage items are discharged at which discharge system and in which time window. Thus, the system analyses the data available and generates handling tasks to be performed based thereon, for example to remove a full ULD at a specific discharge station, including for example a deadline for performing the task.

In this way, computer generated handling instructions received e.g. on a Smartphone can help human-operated ground handlers to utilize their time efficiently, and the system supports fast handling of ULD e.g. right on time transport of ULDs away from discharge stations when they are full. With a more efficient removing of ULDs from the discharge stations, based on knowledge available in the baggage handling system, the number of discharge stations can be reduced for a given baggage handling capacity, thereby decreasing the spatial footprint of the baggage handling system.

Especially, the present invention supports batch building in baggage handling systems, i.e. where a batch of baggage items with the same destination are transported to a ULD discharge within a short time window. With the automatic handling instructions including a deadline, it is possible to ensure right on time removal of ULDs when data in the baggage handling system indicates that the ULDs are full.

The system further supports other ground handling tasks which can improve the overall efficiency of material and baggage handling on ground in an airport, since with data available in the baggage handling system, handling instructions can be transmitted well ahead of the deadline for performing the handling task. The system may be designed to allow generation of handling tasks covering most of, or all of, handling tasks related to all aspects of baggage and material handling between the baggage handling system in the airport and airplanes. Thus, together with the baggage handling system, the ground handling system can be designed to cover all handling tasks for baggage transport from check-in to airplane.

Especially, the ground handling system can be configured to transmit a list of handling instructions to a team of human-operated handling entities, e.g. tug drivers, and with an implemented acceptance feedback and update of the list of handling instructions, it is possible to provide a good utilization of free handling capacity in a team of tug drivers or other handling entities. All members of the team can see the tasks to be performed in the near future, and furthermore it may be visible if each task has been accepted for being performed by another team member. Still, the list of handling tasks may alse be presented to a team manager who may further be able to interact with the system, e.g. create new handling tasks to the team members, which the ground handling system then transmits as handling instructions to the team.

The communication of the handling instructions to human-operated handling entities can be implemented as an app on a Smartphone or a dedicated information device with a display. Preferably, each handling instruction includes a specification of the handling to be performed (what and where) and the deadline (when). Further, the ground handling system can be designed to indicate a level of priority of each task, e.g. indicated by a colour or another code on the display.

The ground handling system is highly suited to include Autonomous Mobile Robots (AMRs) as handling entities, e.g. as a supplement to human-operated handling entities. E.g. handling instructions from the system can be transmitted to an AMR fleet management system which then controls AMRs to perform handling tasks, such as transporting ULDs between two positions in the airport etc. The system can easily be adapted to support an airport's gradual development towards introducing AMRs for ground handling tasks.

Even further, in some embodiments the ground handling system can track performed handling tasks over a period of time and e.g. using an AI learning algorithm, it may be possible to indicate further improvements in efficiency in ground handling operations, e.g. by monitoring time of handling, moving of ULDs etc.

Still further, the ground handling system may be provided with further input regarding a specific airport, e.g. location of ULD rest areas, and thus handling tasks of transporting ULDs to a from rest areas can be generated. The system may also be designed to keep track of available ULDs in the airport, thereby the sytem can generate a specific task of picking up an empty ULD from the rest area and transport it to a specific discharge station.

Still further, the ground handling system may further be designed to improve loading of airplanes with baggage, e.g. loading of ULDs, since the system may keep track of a preferred specific order of ULD to be loaded in the baggage compartment of the airplane, e.g. to allow fast priority baggage. This loading can for example be improved, since the system can transmit a handling instruction indicating that ULDs should be connected to a tug in a specific order corresponding to the order of loading in the airplane, hereby facilitating the airplane loading.

Still further, the ground handling system can also help solving the problem of late arriving baggage, since already when a late arrived baggage item has been checked in, the baggage handling system will determine to quickly transport this baggage item to a discharge station, and already when the baggage handling system has determined the discharge station, the ground handling system will also receive this information, and a handling task can be assigned to a handling entity to ensure that the late arrived baggage item will be picked up already when it arrives at the discharge station, and it can then be transported to its assigned airplane as fast as possible. In this way valuable time can be saved and minimize delay of departing airplanes.

In the following, preferred features and embodiments will be described.

The computer system is preferably configured to generate handling tasks according to an algorithm configured to determine baggage handling operations and estimated time where the baggage handling operations should be performed, based on said input data. Said algorithm is preferably configured to analyse data from the baggage handling system and e.g. other input data and identify a handling task based thereon.

For example, if the controller of the BHS has determined that a batch of baggage items for flight X will arrive at discharge Y within a certain time window, the ground handling system can already when receiving this input data from the BHS identify the handling task of bringing an empty ULD to discharge station Y. E.g. this handling task may include determining the nearest empty ULD, since the ground handling system may further track ULDs present in the airport. Thus, the handling instruction to be transmitted e.g. to mobile devices of a team of tug drivers can be to pick up a specific ULD at a specific ULD rest position and transport it to discharge Y with a deadline based on the expected time of arrival of the batch of baggage items to discharge Y. Further, already the ground handling system may generate the handling task of bringing the same ULD to the expected gate or stand of flight X when it is full. In this way of generating handling instructions at an early state, based on data from the BHS, effective ground handling is made possible.

Preferably, said input data comprises data related to flight times, flight stand locations, and baggage sortation time windows.

Preferably, the BHS comprises one or more inductions for receiving baggage items and a plurality of discharge stations for outputting baggage items, and wherein said input data comprises information related to allocation of discharge stations for outputting baggage items.

Preferably, said input data further comprises data related to scheduled handling of batches of baggage items handled by the BHS. The handling of batches of baggage items allows the BHS to e.g. transfer baggage items for filling a ULD, however this requires that the filled ULD is then quickly removed, in order to ensure a high utilization of the discharge stations. Thus, with information about batches from the BHS, the ground handling system can generate handling task of bringing an empty ULD to the specific discharge station and transmit a handling instruction well advance of the estimated time of arrival of the batch.

In preferred embodiments, the BHS comprises a baggage sortation system comprising one or more sortation devices. Especially, the baggage sortation system may comprise one or more inductions for receiving baggage items, conveyors for transporting the baggage items, and a plurality of baggage discharge stations for output of baggage items. Especially, at least a part of said input data to the ground handling system are received from a controller of the sortation system. Especially, the baggage sortation system may comprise a sorter, and wherein at least a part of said input data are received from a controller of the sorter.

In some embodiment, said input data further comprises data received from a source external to the airport, such as a host system connected to airports, airlines and ground handlers. In some cases, this may provide additional information of importance for ground handling activities in the airport which can be used in the generation of handling tasks.

In preferred embodiments, the computer system is programmed to generate handling tasks related to transport of baggage items to or from the BHS, e.g. transport of trolleys or ULDs to or from inductions or discharge stations of the BHS. Especially, the BHS comprises an Individual Carrier based baggage handling system (ICS), and thus single baggage items can be tracked in the BHS from check-in to discharge or reclaim. The ground handling system can receive especially valuable input data from such BHS.

In preferred embodiments, the computer system is programmed to generate handling tasks related to transport of a container, such as an ULD or a trolley, for containing a plurality of baggage items, such as transport of container empty, full or partially full container. Further, a handling task in relation to ULD handling is to bring a dolly and to mount the ULD on the dolly.

Especially, the computer system may be programmed to generate handling tasks related to transport of containers (e.g. ULDs or trolleys), related to one or more of: 1) transport to or from discharge stations of the baggage handling system, 2) transport to or from inductions of the baggage handling system, 3) transport to or from gates, 4) transport to or from stands, 5) transport from one airplane to another airplane, 6) transport to or from a reclaim area, and 7) transport to or from rest positions within an area of the airport environment.

Especially, the computer system may be programmed to generate handling tasks related to transport of containers, e.g. ULDs, to or from a discharge station of the baggage handling system.

Especially, the computer system may be programmed to generate handling tasks related to transport of containers (ULDs) to or from an induction of the baggage handling system.

Especially, the computer system may be programmed to generate handling tasks related to transport of containers (ULDs) to or from an airplane, such as gates or stands.

Especially, the computer system may be programmed to generate handling tasks related to transport of loaded containers (ULDs) to or from rest positions in the airport, such as indoor rest positions.

Especially, the computer system may be programmed to generate handling tasks related to transport of empty containers (ULDs) to or from a rest position in the airport, such as indoor rest positions.

Especially, the computer system may be configured to generate a task of handling transport of a first container (ULD) between a first position to a second position, and for transmitting a first handling instruction to a first handling entity accordingly.

Preferably, the system is capable of transmitting a list of handling instructions to a team of a plurality of individual handling entities, such as a team of human-operated handling entities.

Preferably, the processor system is programmed to update a handling task and to transmit an updated handling instruction accordingly in response to changes in input data received from the baggage handling system, such as caused by changes in the updated flight information, such as changes in a flight's arrival or departure time and/or changes in a flight's gate or stand. In this way, handling instructions can be kept up to date based first on scheduled time/gate, the estimated time/gate, and then actual time/gate.

Preferably, the one or more handling entities comprises a human-operated tug, such as a tug driver. Especially, the step of transmitting the handling instruction may comprise transmitting the handling instruction to an information device, such as a Smartphone with a dedicated app or a dedicated portable device or a computer with a dedicated app for informing the human operator about specification of the handling to be performed and the time related thereto, such as by means of a visible and/or audible message. Especially, the information device may comprise a display, and wherein the information device is programmed to present the handling instruction on the display by means of at least one of: a text, a graphical symbol, indication of a position on a map, and a colour code.

Especially, the information device may comprise one of: a Smartphone with a dedicated app configured for communication with the computer system, a dedicated portable device programmed for communication with the computer system, and a computer device programmed for communication with the computer system. Especially, the information device may be configured for communication with the computer system via an internet connection, preferably a wireless internet connection, e.g. via a 4G/5G connection to the internet or with a wi-fi net, or in some cases via a wired internet connection. Especially, the information device is programmed to present a plurality of handling instructions representing different tasks on the display.

In preferred embodiments, the computer system is configured to transmit a handling instruction to each of plurality of handling entities forming a team. Especially, the computer system may be configured to transmit the handling instruction to a plurality of individual information devices assigned to respective humans forming the team.

In preferred embodiments, the computer system is configured to receive a handling accept from one of the plurality of individual information devices as a confirmation that the assigned human will perform the task specified in the handling instruction. In this way, the system can keep track of transmitted handling instructions whether it is expected that the handling tasks will be performed. Especially, the computer system may be configured to update a list of handling instructions transmitted to said plurality of individual information devices in response to receipt of the handling accept, so as to indicate the handling accept. Thus, team members and team manager can see which tasks are accepted by other team members. Especially, the computer system is configured to update generation of handling tasks, when it is determined that a handling instruction has not been accepted within a predetermined time. E.g. the system may generate an express or emergency handling instruction to the team or to another team of handling entities to ensure the tasks is performed.

Especially, the one or more handling entities may comprise a robotic handling device, such as an Autonomous Mobile Robot (AMR), such as a fleet of AMRs. Especially, the plurality of handling entities comprises both one or more Autonomous Mobile Robots (AMRs) and one or more human-operated handling devices to perform the handling according to the handling instruction.

In some embodiments, the computer system is configured to receive a feedback, when a handling instruction has been performed. Especially, a list of handling instructions or handling tasks can be updated accordingly.

Preferably, the computer system is configured to generate handling tasks according to a priority algorithm which discriminates between different priority levels for different generated handing tasks. Especially, the computer system may be configured to transmit an indication of an assigned priority level along with the handling instructions, such as indicating priority level with a color code, a symbol, an animation, or presenting handling instructions in ranked order etc. Hereby, it can be ensured that the most important or urgent tasks are handled before less important tasks. For example, late checked in baggage items may be a high priority task, since transport of this baggage item from the BHS to the airplane is a crucial handling task to be performed as fast as possible to avoid delay of an airplane departure.

Preferably, the computer system is configured to allow one or more assigned operators to enter a manual handling task to the computer system, which in response transmits a handling instruction to one or more handling entities. Hereby, e.g. a team manager can fill in a handling task which is not automatically generated by the system.

Especially, the computer system may be configured to receive an input from a user, such as an operator or manager. Specifically, the computer system may be configured to change an automatically generated handling instruction in response to the user input. Especially, the computer system may be configured to transmit a handling instruction in response to the user input, for example the computer system may be configured to receive information defining specification of a handling to be performed and a timing related thereto, which are both entered by the user.

Especially, the system comprises a team manager computer client configured to display a list of handling tasks or handling instructions transmitted over a period of time to a user. The same team manager computer client may allow the user to enter a new handling tasks to the system.

In some embodiments, the system is configured to log handling tasks generated over a period of time along with said input data to evaluate handling performance and/or to provide feedback to the computer system to improve performance of the task generation or the handling instructions based thereon, such as by means of an AI algorithm. Hereby, the time for performing certain tasks can be evaluated which can be used by the system in the generation of handling instructions, especially estimating the time from transmittal of the handling instruction to actual performance of the handling.

The system may be configured to track a physical location a plurality of a plurality of handling entities, such as by means of a GPS tracker on information devices assigned to human operators, and wherein the computer system is configured to determine to which of the handling entities to transmit a handling instruction, based on the physical locations of the plurality of handling entities. This can allow minimizing transport distance and/or transport time for performing the handling task according to the handling instruction. Especially, the computer system may be configured to select the nearest handling entity, e.g. the nearest human-operated tug for picking up an empty ULD at a specific rest position.

The system may be configured to transmit handling instructions as SMS messages to a handling entity, such as to a Smartphone of a human-operated handling entity. This can be used such as a fail safe mode of operation, in case a primary wireless internet connection between the ground handling system and information devices of the handling entities is lost. Especially, the app on the Smartphone of the human-operated handling entities can be configured to extract handling instruction information from a received SMS and to display the handling instruction to the user as during normal operation with wireless internet connection.

In a second aspect, the invention provides an airport ground handling system comprising a baggage handling system, such as an individual carrier based baggage handling system (ICS), and the system according to the first aspect.

In a third aspect, the invention provides a computer implemented method for controlling ground operations of an airport, the method comprises:
- receiving input data at least comprising data from a baggage handling system of the airport capable of handling baggage items, such as an Individual Carrier based baggage handling system (ICS),
- generating handling tasks based at least on the input data received from the baggage handling system, such as handling tasks related to transport of baggage items to or from the baggage handling system,
- generating handling instructions based on the generated handling tasks, wherein each handling instruction comprises a specification of a handling to be performed and a timing related thereto, such as a deadline for performing the handling,
- transmitting the handling instructions to one or more handling entities, such as each handling entity being a person or a team of persons for performing manual operations or for operating human-operating devices, and a device or a group of devices such a AMRs.

In a fourth aspect, the invention provides a computer program comprising computer readable code which, when executed on a computer system, causes the computer system to perform the method according to the third aspect.

In a fifth aspect, the invention provides a tangible computer readable medium with the computer readable code according to the fourth aspect stored thereon.

In a sixth aspect, the invention provides a method for operating an airport comprising performing the method according to the third aspect.

It is appreciated that the same advantages and embodiments described for the first aspect apply as well for the other mentioned aspects. Further, it is appreciated that the described embodiments can be intermixed in any way between the mentioned aspects.

### BRIEF DESCRIPTION OF THE FIGURES

The invention will now be described in more detail with reference to embodiments and regard to the accompanying figures of such embodiments, of which
FIG. 1 illustrates a sketch of an airport with a baggage handling system (BHS) with illustration of various ground handling transport operations to be performed,
FIG. 2 illustrates a block diagram of a ground handling system embodiment,
FIG. 3 illustrates an example of display with handling instruction to a user, and
FIG. 4 illustrates steps of a method embodiment.

The figures illustrate specific ways of implementing the present invention and are not to be construed as being limiting to other possible embodiments falling within the scope of the attached claim set.

### DETAILED DESCRIPTION OF EMBODIMENTS

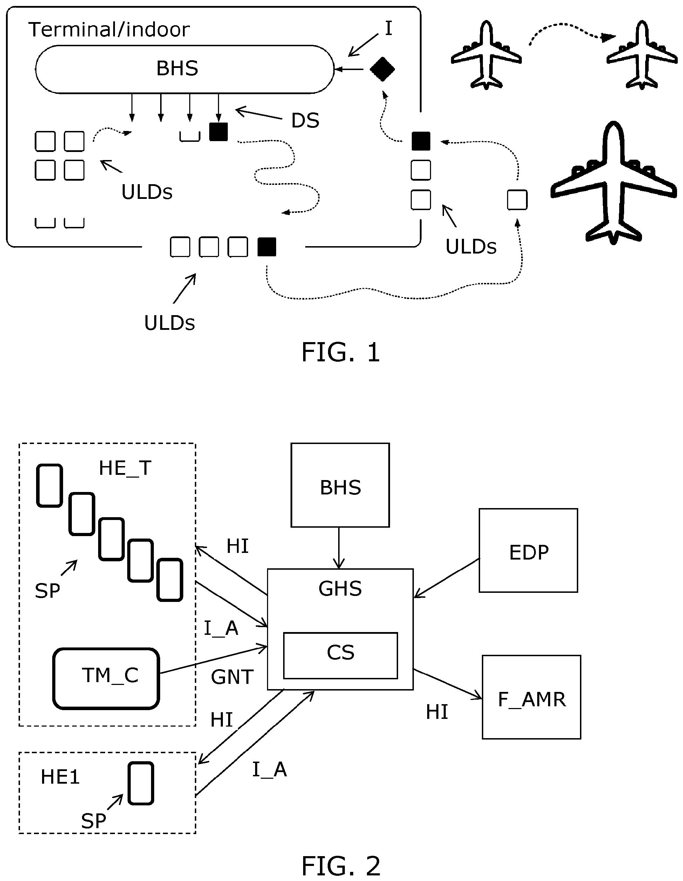

FIG. 1 illustrates a sketch of an airport with a baggage handling system BHS placed in a terminal, e.g. indoor. The BHS has inductions I to receive baggage items and discharge stations DS where baggage items are discharged.

The curved arrows illustrate some of the various ground handling transport operations to be performed relating to transporting of baggage containers, here illustrated as Unit Load Devices ULDs, but it may also be for example trolleys. These handling operations may comprise transport of empty or full ULDs on dollies by means of a tug driver driving a tug which can pull one or more dollies each with a ULD.

As seen, many handling operations relate to transport of ULDs to or from the baggage handling system BHS, however some operations also involve airplane to airplane ULD transport. Further, transport to and from ULD rest areas are illustrated.

FIG. 2 illustrates a block diagram of an embodiment of a ground handling system GHS. The ground handling system has a computer system CS programmed to receive input data from the baggage handling system BHS of the airport, e.g. also from an external data provider EDP. In response, the ground handling system GHS analyses the input data which indicates time windows, flight data as well as various information regarding handling of baggage items in the system BHS, including time windows for induction and discharge of baggage items for specific flights.

With these data available in the ground handling system GHS, the an analysis is performed serving to extract events which must be followed by a ground handling task to be performed, as well as the time of performing the handling task, e.g. a deadline for performing the handling task. This can include the handling tasks illustrated in FIG. 1, e.g. handling tasks for a team of tug drivers. When the handling task has been generated, a handling instruction HI is then sent to one or more handling entities, either a team HE_T of individual handling entities, or an individual handling entity HE1. Still further, a handling instruction can be transmitted to a fleet F_AMR of Autonomous Mobile Robots which may be capable of performing some handling tasks.

In case of human operators, e.g. tug drivers or other handling personnel, each operator has a Smartphone SP with an app which displays the handling instruction HI to the operator. The operator can in response indicate an accept of a handling intruction I_A which is transmitted to the ground handling system GHS.

In a team HE_T of handling entities, a team manager computer client TM_C can indicate an overview of handling tasks assigned to the team HE_T which allows a team manager to monitor the operations. Further, team manager computer client TM_C may be configured to allow the user to generate a new handing task GNT to the ground handling system GNT, in case the user wants to add a handling task to supplement the automatically generated handling tasks generated by the computer system CS.

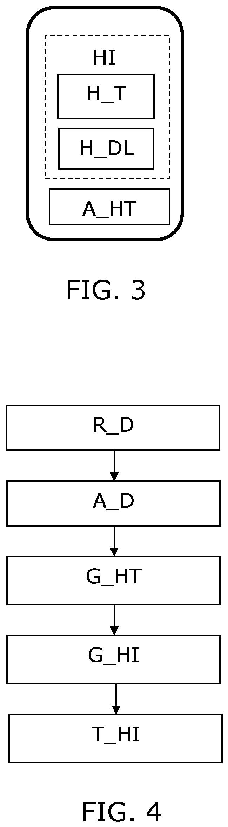

FIG. 3 illustrates a simple example of a display of an information device, e.g. a Smartphone, of a human operator. Here, the handling instruction HI includes a specification of a handling task H_T which may be specified in text or graphical symbols, e.g. indicating a trolley a ULD etc. Further, the handling instruction HI includes a handling deadline H_DL indicating the last time of performing the task. Possibly further information may be added, airline company, flight details etc. Still further, an indication of importance or priority of the handling instruction HI may also be included, e.g. with a color code, an animation or a number. Further, several handling instructions may be presented on one screen to the user. Still further, the user can accept the handling task by confirming using a field of the display A_HT.

FIG. 4 illustrates steps of a method embodiment, i.e.t a computer implemented method for controlling ground operations of an airport. The method comprises receiving R_D input data at least comprising data from a BHS of the airport capable of handling baggage items, preferably the baggage handling system is an Individual Carrier based baggage handling system (ICS). Next, analysing A_D the input data to identify events which require a handling to be performed. Next, generating G_HT a handling task based at least on the input data received from the baggage handling system, such as a handling task related to transport of baggage items to or from the BHS. Next, generating a G_HI handling instruction based on the generated handling task, wherein each handling instruction comprises a specification of a handling to be performed and a timing related thereto, such as a deadline for performing the handling. This deadline is based on timing information regarding the various events received in the data from the BHS. Finally, transmitting T_HI the handling instructions to one or more handling entities, e.g. to an information device e.g. a Smartphone of a human operator of a tug or the like.

In the following embodiments E1-E46 will be defined:
E1. An airport ground handling system (GHS) comprising:
   - a computer system (CS) comprising at least one processor and a memory, wherein the computer system is configured:
      - to receive input data at least comprising data from a baggage handling system (BHS) of the airport capable of handling baggage items, such as an Individual Carrier based baggage handling system (ICS),
      - to generate handling tasks based at least on the input data received from the baggage handling system, such as handling tasks related to transport of baggage items to or from the baggage handling system,
      - to generate handling instructions based on the generated handling tasks, wherein each handling instruction comprises a specification of a handling to be performed and a timing related thereto, such as a deadline for performing the handling,
      - to transmit the handling instructions to one or more individual information devices of respective handling entities, such as each handling entities being a person or a team of persons for performing manual operations or for operating human-operating devices, and a device or a group of devices such a AMRs.
E2. The system according to E1, wherein the computer system is configured to generate handling tasks according to an algorithm configured to determine baggage handling operations and estimated time where the baggage handling operations should be performed, based on said input data.
E3. The system according to E1 or E2, wherein said input data comprises data related to flight times, flight stand locations, and baggage sortation time windows.
E4. The system according to any of the preceding embodiments, wherein the baggage handling system (BHS) comprises one or more inductions for receiving baggage items and a plurality of discharge stations for outputting baggage items, and wherein said input data comprises information related to allocation of discharge stations for outputting baggage items.
E5. The system according to any of the preceding embodiments, wherein said input data further comprises data related to scheduled handling of batches of baggage items handled by the baggage handling system (BHS).
E6. The system according to any of the preceding embodiments, wherein said input data further comprises data received from a source external to the airport, such as a host system connected to airports, airlines and ground handlers (e.g. Amadeus etc.).
E7. The system according to any of the preceding embodiments, wherein the baggage handling system comprises a baggage sortation system comprising one or more sortation devices, such as the baggage sortation system comprising: one or more inductions for receiving baggage items, conveyors for transporting the baggage items, and a plurality of baggage discharge stations for output of baggage items, such as comprising a sorter, such as at least a part of said input data are received from a controller of the baggage sortation system, such as a controller of the sorter.
E8. The system according to any of the preceding embodiments, wherein the computer system is programmed to generate handling tasks related to transport of baggage items to or from the baggage handling system (BHS).
E9. The system according to any of the preceding embodiments, wherein the baggage handling system (BHS) comprises an Individual Carrier based baggage handling system (ICS).
E10. The system according to any of the preceding embodiments, wherein the computer system is programmed to generate handling tasks related to transport of a container (ULD), such as an ULD or a trolley, for containing a plurality of baggage items, such as transport of container empty, full or partially full container.
E11. The system according to E10, wherein the computer system is programmed to generate handling tasks related to transport of containers (ULDs, trolleys), related to one or more of: 1) transport to or from discharge stations of the baggage handling system, 2) transport to or from inductions of the baggage handling system, 3) transport to or from gates, 4) transport to or from stands, 5) transport from one airplane to another airplane, 6) transport to or from a reclaim area, and 7) transport to or from rest positions within an area of the airport environment.
E12. The system according to E11, wherein the computer system is programmed to identify handling tasks related to transport of containers (ULDs) to or from a discharge station of the baggage handling system.
E13. The system according to any of E11 or E12, wherein the computer system is programmed to identify handling tasks related to transport of containers (ULDs) to or from an induction of the baggage handling system.
E14. The system according to any of E11-E13, wherein the computer system is programmed to identify handling tasks related to transport of containers (ULDs) to or from an airplane, such as gates or stands.
E15. The system according to any of E11-E14, wherein the computer system is programmed to identify handling tasks related to transport of loaded containers (ULDs) to or from rest positions in the airport, such as indoor rest positions.
E16. The system according to any of E11-E15, wherein the computer system is programmed to identify handling tasks related to transport of empty containers (ULDs) to or from a rest position in the airport, such as indoor rest positions.
E17. The system according to any of the preceding embodiments, wherein the computer system is configured to generate a task of handling transport of a first container (ULD) between a first position to a second position, and transmitting a first handling instruction to a first handling entity accordingly.
E18. The system according to any of the preceding embodiments, comprising transmitting a list of handling instructions to a team of a plurality of individual handling entities, such as a team of human-operated handling entities.
E19. The system according to any of the preceding embodiments, wherein the processor system is programmed to update a handling task and to transmit an updated handling instruction accordingly in response to changes in input data received from the baggage handling system, such as caused by changes in the updated flight information, such as changes in a flight's arrival or departure time and/or changes in a flight's gate or stand.
E20. The system according to any of the preceding embodiments, wherein the one or more handling entities comprises a human-operated tug, such as a tug driver.
E21. The system according to E20, wherein the step of transmitting the handling instruction comprises transmitting the handling instruction to an information device, such as a Smartphone with a dedicated app or a dedicated portable device or a computer with a dedicated app for informing the human operator about specification of the handling to be performed and the time related thereto, such as by means of a visible and/or audible message.
E22. The system according to E21, wherein the information device comprises a display, and wherein the information device is programmed to present the handling instruction on the display by means of at least one of: a text, a graphical symbol, indication of a position on a map, and a colour code.
E23. The system according to E21 or E22, wherein the information device comprises one of: a Smartphone with a dedicated app configured for communication with the computer system, a dedicated portable device programmed for communication with the computer system, and a computer device programmed for communication with the computer system.
E24. The system according to any of E21-E23, wherein the information device is configured for communication with the computer system via an internet connection.
E25. The system according to any of E21-E25, wherein the information device is programmed to present a plurality of handling instructions representing different tasks on the display.
E26. The system according to any of the preceding embodiments, wherein the computer system is configured to transmit a handling instruction to each of plurality of handling entities forming a team.
E27. The system according to E26, wherein the computer system is configured to transmit the handling instruction to a plurality of individual information devices assigned to respective humans forming the team.
E28. The system according to any of the preceding embodiments, wherein the computer system is configured to receive a handling accept from one of the plurality of individual information devices as a confirmation that the assigned human will perform the task specified in the handling instruction.
E29. The system according to E28, wherein the computer system is configured to update a list of handling instructions transmitted to said plurality of individual information devices in response to receipt of the handling accept, so as to indicate the handling accept.
E30. The system according to E28 or E29, wherein the computer system is configured to update generation of handling tasks, when it is determined that a handling instruction has not been accepted within a predetermined time.
E31. The system according to any of the preceding embodiments, wherein the one or more handling entities comprises a robotic handling device, such as an Autonomous Mobile Robot (AMR), such as a fleet of AMRs.
E32. The system according to E31, wherein the plurality of handling entities comprises both one or more Autonomous Mobile Robots (AMRs) and one or more human-operated handling devices to perform the handling according to the handling instruction.
E33. The system according to any of the preceding embodiments, wherein the computer system is configured to receive a feedback, when a handling instruction has been performed.
E34. The system according to any of the preceding embodiments, wherein the computer system is configured to generate handling tasks according to a priority algorithm which discriminates between different priority levels for different generated handing tasks.
E35. The system according to E34, wherein the computer system is configured to transmit an indication of an assigned priority level along with the handling instructions, such as indicating priority level with a color code, a symbol, an animation, a number, or presenting handling instructions in ranked order etc.
E36. The system according to any of the preceding embodiments, wherein the computer system is configured to allow one or more assigned operators to enter a manual handling task to the computer system, which in response transmits a handling instruction to one or more handling entities.
E37. The system according to any of the preceding embodiments, wherein the computer system is configured to receive an input from a user, such as an operator or manager.
E38. The system according to E37, wherein the computer system is configured to change an automatically generated handling instruction in response to the user input.
E39. The system according to E37 or E38, wherein the computer system is configured to transmit a handling instruction in response to the user input, such as the computer system being configured to receive information defining specification of a handling to be performed and a timing related thereto, entered by the user.
E40. The system according to any of the preceding embodiments, wherein the system comprises a team manager computer client configured to display a list of handling tasks or handling instructions transmitted over a period of time to a user.
E41. The system according to any of the preceding embodiments, wherein the system is configured to log handling tasks generated over a period of time along with said input data to evaluate handling performance and/or to provide feedback to the computer system to improve performance of the task generation or the handling instructions based thereon, such as by means of an AI algorithm.
E42. The system according to any of the preceding embodiments, wherein the system is configured to transmit the handling instructions in a wireless format to the handling entities, such as via a wireless internet connection.
E43. The system according to any of the preceding embodiments, wherein the system is configured to track a physical location a plurality of a plurality of handling entities, such as by means of a GPS tracker on information devices assigned to human operators, and wherein the computer system is configured to determine to which of the handling entities to transmit a handling instruction, based on the physical locations of the plurality of handling entities, so as to minimize transport distance and/or transport time for performing the handling task according to the handling instruction.
E44. The system according to any of the preceding embodiments, wherein the system is configured to transmit a handling instruction as an SMS to a handling entity, such as a fail safe mode of operation.
E45. An airport ground handling system comprising:
   - a baggage handling system (BHS), such as an individual carrier based baggage handling system (ICS), and
   - the system according to any of E1-E44.
E46. A computer implemented method for controlling ground operations of an airport, the method comprises:
   - receiving (R_D) input data at least comprising data from a baggage handling system (BHS) of the airport capable of handling baggage items, such as an Individual Carrier based baggage handling system (ICS),
   - generating (G_HT) handling tasks based at least on the input data received from the baggage handling system, such as handling tasks related to transport of baggage items to or from the baggage handling system,
   - generating (G_HI) handling instructions based on the generated handling tasks, wherein each handling instruction comprises a specification of a handling to be performed and a timing related thereto, such as a deadline for performing the handling,
   - transmitting (T_HI) the handling instructions to one or more handling entities, such as each handling entity being a person or a team of persons for performing manual operations or for operating human-operating devices, and a device or a group of devices such a AMRs.
E47. A computer program comprising computer readable code which, when executed on a computer system, causes the computer system to perform the method according to E46.
E48. A tangible computer readable medium with the computer readable code according to E47 stored thereon.
E49. A method for operating an airport comprising performing the method according to E46.

To sum up, the invention provides an airport ground handling system (GHS) comprising a computer system (CS) comprising at least one processor and a memory. The computer system is configured to receive input data at least comprising data from a baggage handling system (BHS) of the airport capable of handling baggage items, such as an Individual Carrier based baggage handling system (ICS). Further, the system is configured to generate handling tasks based at least on the input data received from the baggage handling system, e.g. handling tasks related to transport of baggage items to or from the BHS, e.g. transport of Unit Load Devices (ULDs). Further, the system is configured to generate handling instructions based on the generated handling tasks, wherein each handling instruction comprises a specification of a handling to be performed and a timing related thereto, such as a deadline for performing the handling. Further, the system is configured to transmit the handling instructions to one or more individual information devices of respective handling entities, such as each handling entities being a person or a team of persons for performing manual operations or for operating human-operating devices or a device or a group of devices such Autonomous Mobile Robots. E.g. a handling instruction can be transmitted to a team of human-operated handling entities, such as tug drivers. The system allows effective ground handling and thereby supports a BHS capable of handling batches of baggage items to be filled in ULDs, which requires right on time handling of ULDs.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An airport ground handling system (GHS) comprising:
- a computer system (CS) comprising at least one processor and a memory, wherein the computer system is configured:
- to receive input data at least comprising data from a baggage handling system (BHS) of the airport capable of handling baggage items, such as an Individual Carrier based baggage handling system (ICS),
- to generate handling tasks based at least on the input data received from the baggage handling system, such as handling tasks related to transport of baggage items to or from the baggage handling system,
- to generate handling instructions based on the generated handling tasks, wherein each handling instruction comprises a specification of a handling to be performed and a timing related thereto, such as a deadline for performing the handling,
- to transmit the handling instructions to one or more individual information devices of respective handling entities, such as each handling entities being a person or a team of persons for performing manual operations or for operating human-operating devices or a device or a group of devices such a AMRs.

2. The system according to claim 1, wherein the computer system is configured to generate handling tasks according to an algorithm configured to determine baggage handling operations and estimated time where the baggage handling operations should be performed, based on said input data.

3. The system according to claim 1 or 2, wherein said input data comprises data related to flight times, flight stand locations, and baggage sortation time windows.

4. The system according to any of the preceding claims, wherein the baggage handling system (BHS) comprises one or more inductions for receiving baggage items and a plurality of discharge stations for outputting baggage items, and wherein said input data comprises information related to allocation of discharge stations for outputting baggage items.

5. The system according to any of the preceding claims, wherein said input data further comprises data related to scheduled handling of batches of baggage items handled by the baggage handling system (BHS).

6. The system according to any of the preceding claims, wherein the computer system is programmed to generate handling tasks related to transport of a container (ULD), such as an ULD or a trolley, for containing a plurality of baggage items, such as transport of container empty, full or partially full container, such as to generate handling tasks related to transport of containers (ULDs) to or from a discharge station of the baggage handling system.

7. The system according to any of the preceding claims, comprising transmitting a list of handling instructions to a team of a plurality of individual handling entities, such as a team of human-operated handling entities.

8. The system according to any of the preceding claims, wherein the processor system is programmed to update a handling task and to transmit an updated handling instruction accordingly in response to changes in input data received from the baggage handling system, such as caused by changes in the updated flight information, such as changes in a flight's arrival or departure time and/or changes in a flight's gate or stand.

9. The system according to any of the preceding claims, wherein the step of transmitting the handling instruction comprises transmitting the handling instruction to an information device, such as a Smartphone with a dedicated app or a dedicated portable device or a computer with a dedicated app for informing the human operator about specification of the handling to be performed and the time related thereto, such as by means of a visible and/or audible message.

10. The system according to any of the preceding claims, wherein the information device comprises one of: a Smartphone with a dedicated app configured for communication with the computer system, a dedicated portable device programmed for communication with the computer system, and a computer device programmed for communication with the computer system, wherein the information device is configured for communication with the computer system via an internet connection.

11. The system according to any of the preceding claims, wherein the computer system is configured to receive a handling accept from one of the plurality of individual information devices as a confirmation that the assigned human will perform the task specified in the handling instruction.

12. The system according to any of the preceding claims, wherein the plurality of handling entities comprises both one or more Autonomous Mobile Robots (AMRs) and one or more human-operated handling devices.

13. The system according to any of the preceding claims, wherein the computer system is configured to generate handling tasks according to a priority algorithm which discriminates between different priority levels for different generated handing tasks, and wherein the computer system is configured to transmit an indication of an assigned priority level along with the handling instructions, such as indicating priority level with a color code, a symbol, an animation, or presenting handling instructions in ranked order etc.

14. The system according to any of the preceding claims, wherein the computer system is configured to allow one or more assigned operators to enter a manual handling task to the computer system, which in response transmits a handling instruction to one or more handling entities.

15. The system according to any of the preceding claims, wherein the system is configured to transmit a handling instruction as an SMS to a handling entity, such as a fail safe mode of operation.
